# EUROPEAN PATENT SPECIFICATION

(11) **EP 3 912 860 B1**
(45) Date of publication and mention of the grant of the patent: **31.01.2024**
(21) Application number: 21175075.7
(22) Date of filing: 20.05.2021
(51) Int. Cl.: B60P 7/13

(54) **IMPROVEMENTS TO AUTOMATIC TWISTLOCK ARRANGEMENTS**
VERBESSERUNGEN AN AUTOMATISCHEN DREHRIEGELANORDNUNGEN
AMÉLIORATIONS PORTANT SUR DES AGENCEMENTS DE VERROU TOURNANT AUTOMATIQUE

(30) Priority: 20.05.2020 AU 2020901621
(43) Date of publication of application: 24.11.2021
(73) Proprietor: Skrin Pty Ltd, South Yarra, Victoria 3141 (AU)
(72) Inventor: NYHOLM, Ture, South Yarra, Victoria, 3141 (AU)
(74) Representative: ABG Intellectual Property Law, S.L.

(56) References cited:
- CN-A- 110 696 709
- GB-A- 2 303 401
- US-A1- 2019 359 113
- US-B2- 9 238 430

## Description

### Field of the invention

The invention relates to a improvements to automatic twistlock arrangements and in particular to a automatic twistlock that may be received below a load surface of a railway wagon platform (rail wagon) and/or a container carrying trailer.

### Background

Container locks, and more specifically twistlocks are used to fasten international shipping containers to a load surface of transport vehicles, such as ship or rail wagons and trailers. Also, where containers are stacked, twistlocks fasten adjacent containers on top of one another.

Twistlocks comprise a fastener housing for fitting between the container and a load surface of a container carrier vehicle, such as a railway wagon platform (rail wagon) and trailers, with a slot engaging portion that fits into the slot of a corner casting of the container, and a shaft adapted for rotation about a fastener housing, an enlarged elongate cone or locking head at one or both ends of the shaft is rotatable between a locked position and an unlocked position, such that in the locked position, portions of the cone overlap the slot of the corner casting to engage an inside of the corner casting to thereby hold the container. In the unlocked position the cone is aligned with the slot engaging portion of the fastener housing to enable it to pass through the slot, the shaft typically comprises a biasing (spring) means to bias the shaft to the locked position.

Twistlocks may be operated manually or may be semi-automatic or automatic. Automatic twistlocks have been developed such that the twistlock head (cone) has a bevelled upper side so that on placing the container on the twistlock head, the side of the slot urges the cone and hence the shaft to rotate against the action of the biasing means towards the disengaged position and thus allows entry into the corner casting. Additionally, the automatic twistlock head includes a bevelled underside, so that the force of lifting the container urges edges of the slots to bear against the lower bevels to cause the twistlock head to rotate to the unlocked position thereby allowing for passage through the slot and thus out of the container.

Standard shipping containers are generally 8 ft (2.43 m) wide, 8.5 ft (2.59 m) high and conventionally come in two lengths, being either 20 ft (6.06 m) or 40 ft (12.2 m) long. As a result, load surfaces of transport vehicles, such as ship or rail wagons and trailers, are generally sized to accommodate up to the maximum 40 ft long shipping containers. Further, so that the load surface of transport vehicles can accommodate and secure both lengths of shipping containers they generally include a twistlock positioned at each corner of the load surface as well as at least one twistlock positioned at approximately the midpoint of each side of the load surface so that they are able to also accommodate the 20 ft long shipping container. However, conventional twistlocks are large, bulky units that, due to their size, take up a considerable amount of room on the container bearing/loading surface of the container carrying wagon or trailer. Also, when placing a 40 ft long shipping container onto the load surface of a transport vehicle, the twistlocks positioned at the midpoints of each side of the load surface interfere with the ability of the twistlocks positioned at the corners of the load surface to engage with the slot of the corner casting of the shipping container.

Consequently, systems have been developed such that twistlocks may be folded or retracted within recesses located in the container bearing/loading surface of the container carrying wagon or trailer when not in use..

In use the position of the twistlock can be difficult to determine by others, such as crane operators, who are positioned remotely from the rail wagon. A twistlock is either in the locked position, to securely hold the container in place on the rail wagon, or in the unlocked position so as to allow removal of the container from the rail wagon. At present a crane operator may receive a notification from a worker close to the container that the twistlocks securing a container to a rail wagon are unlocked. The worker must first walk around the container to check the status of each twistlock if they are manual twistlocks and indicate to the crane operator that it is safe to remove the container from the rail wagon, either by visually indicating that all is clear or by voice communication over radio.

Even with semiautomatic and automatic twistlocks, which do not require an operator to manually unlock them, there is benefit in being able to quickly and easily determine the locked/unlocked state of the twistlock so that crane operators are able to safely remove containers from rail wagons to avoid trying to remove a container whilst a twistlock may still be in the locked position, which could result in the crane derailing the rail wagon causing work at the site to come to a halt in order until such time as the rail wagon has been rerailed. Similarly, if the twistlocks on a truck bed have not properly disengaged with a container (moved to the unlocked position), a crane attempting to raise the container can cause significant damage to the trailer and attached cab.

Document US 2019/0359113 A1 discloses a vehicle for carrying containers, with a twistlock arrangement similar to the preamble of claim 1.

### Object of the invention

It is an object of the invention to overcome, or at least substantially ameliorate, the disadvantages and shortcomings of the prior art.

Other objects and advantages of the present invention will become apparent from the following description, taken in connection with the accompanying drawings, wherein by way of illustration and example, certain embodiments of the present invention are disclosed.

### Summary of the invention

According to the present invention, there is provided a twistlock arrangement for connecting a container to a load surface of a rail wagon or a trailer, wherein the retractable automatic twistlock arrangement includes:
a twistlock having a fastener element, the fastener element including a rotatable fastener shaft with a twistlock head,
   wherein the fastener element is adapted to be operable between a locked position and an unlocked position, and
wherein the rotatable fastener shaft includes a position indictor arrangement operatively coupled to a communication module which can transmit the position of the rotatable fastener shaft.

According to the present invention, the position indictor arrangement includes a switch means.

According to the present invention, the switch means is a magnetic switch having a first part attached to the rotatable fastener shaft and a stationary (= static/stationary/fixed) second part operatively connected to the communication module.

According to the present invention, there is a magnetic conduit placed between the first part attached to the rotatable fastener shaft and the static/stationary/fixed second part operatively connected to the communication module

In preference, the first part is a magnet.

In preference, the magnetic conduit is operatively connected to the communication module.

In preference, when the magnet in the first location and the magnetic conduit in a second location are aligned/coaxially aligned, the communication module transmits a signal indicating that the twistlock is in a locked/closed position.

In preference, when the magnet in the first location and the magnetic conduit in a second location are not aligned/coaxially aligned, the communication module transmits a signal indicating that the twistlock is in an open/unlocked position.

In preference, the rotatable fastener shaft includes an opening for receiving the first part of the switch means.

In preference, the static/stationary/fixed second part is a housing that at least partially surrounds the rotatable fastener shaft.

In preference, the housing includes a conduit.

In preference, the conduit includes a magnetic coupler being a ferromagnetic rod.

In preference, the twistlock is an automatic twist lock.

In preference, the twistlock is a retractable twistlock assembly.

In preference, wherein the fastener element is adapted to be operable between a locked position and an unlocked position when brought into contact with a corner casting of the container by way of an activator spring, wherein the activator spring biases the fastener element to the locked position.

In preference, the communication module includes a wireless transmitter that may transmit the position of the rotatable fastener shaft described for any communication link, such as any other WPAN communication link (e.g., Bluetooth low power, Bluetooth 5, ANT+, Zigbee (IEEE 802.15.4), other IEEE 802.15 protocols, IEEE 802.11 A, B or G without limitation, or Wi-Fi (IEEE 802.11)), a cellular communication link, an infrared communication link, any other wireless communication link, any other communication link, or any combination of the preceding.

In a further unclaimed embodiment there is a system of communicating an operations status of a twistlock including a twistlock arrangement for connecting a container to a load surface of a rail wagon or a trailer, wherein the retractable automatic twistlock arrangement includes:
a twistlock having a fastener element, the fastener element including a rotatable fastener shaft with a twistlock head,
   wherein the fastener element is adapted to be operable between a locked position and an unlocked position, and
wherein the rotatable fastener shaft includes a position indictor arrangement operatively coupled to a communication module which can transmit the position of the rotatable fastener shaft.

In order to now describe the invention in greater detail a series of preferred embodiments will be presented with the assistance of the following illustrations and accompanying text.

### Summary of the drawings

Figure 1 is a perspective view of a retractable automatic container lock in a preferred embodiment of the invention;
Figure 2 is an alternative perspective view of a retractable automatic container lock in a preferred embodiment of the invention;
Figure 3 is an exploded view of a retractable automatic container lock in a preferred embodiment of the invention;
Figure 4 is a side view of the twistlock and shaft;
Figure 5 is a cross section view of the shaft at B-B;
Figure 6 is a cross section of the flange/shuttle showing the magnet located in the shaft, the switch and the location of the communications module;

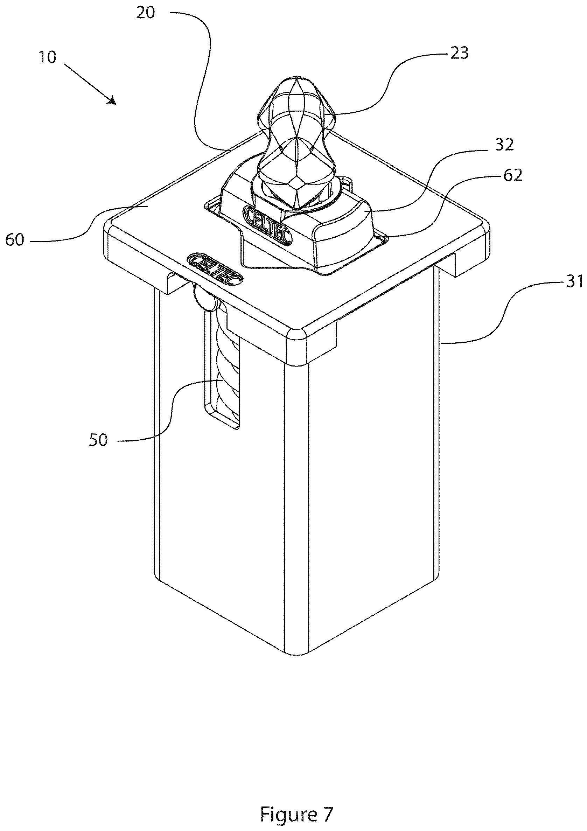

Figure 7 is an upper perspective view;

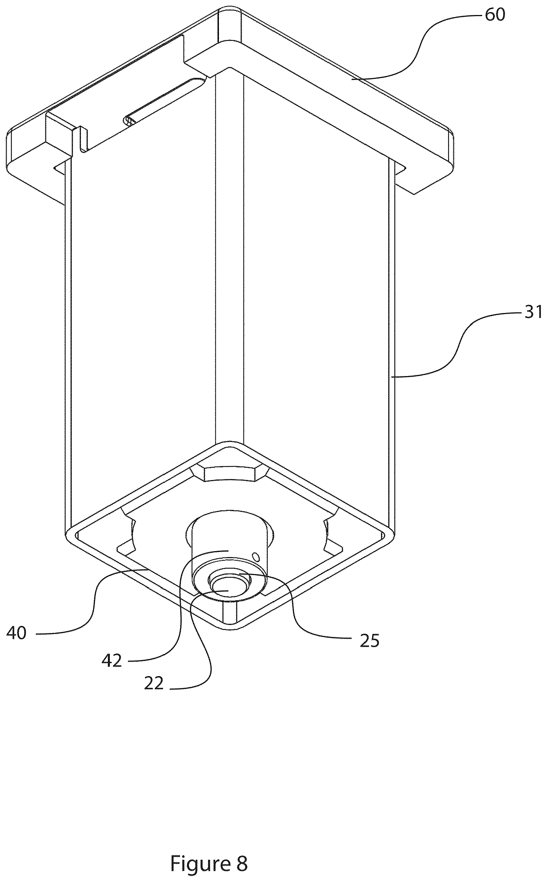

Figure 8 is a lower perspective view.

### Detailed description of the invention

The following description will describe several embodiments of the present invention.

The twistlock arrangement of a first preferred embodiment is shown generally as (10) which is a retractable automatic twistlock however the principles wil also apply to other embodiments of twistlock arrangements.

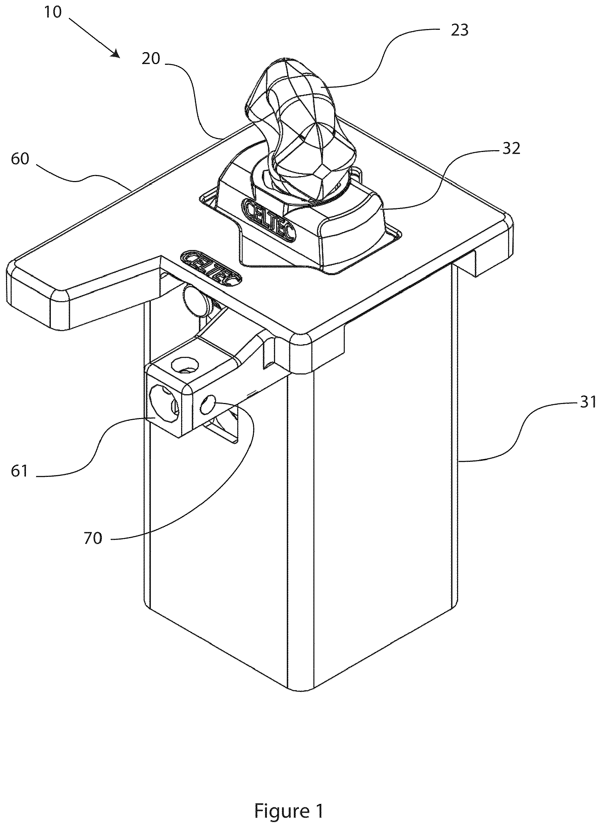

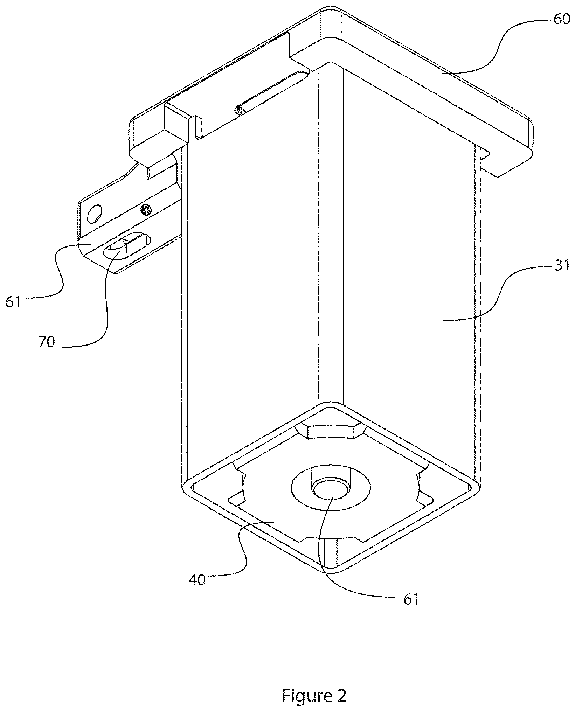

In particular, Figures 1 to 3 show an embodiment of the retractable automatic twistlock arrangement (10) of the present invention, which includes an automatic twistlock (20). Automatic twistlocks, as shown in Figures 1 to 3, generally include a fastener element (21) including a rotatable fastener shaft (22) and twistlock head (23), also known as a cone. The twistlock head (23) has a bevelled upper side so that when placing a corner casting of a container (not shown) on the twistlock head, the side of a slot on the container urges the cone and hence the shaft to rotate against the action of the biasing means towards the disengaged position and thus allows entry into the corner casting. Additionally, the automatic twistlock head (23) includes a bevelled underside, so that the force of lifting the container urges edges of the container slots to bear against the lower bevels to cause the twistlock head (23) and rotatable fastener shaft (22) to rotate to the unlocked position thereby allowing for passage through the slot and thus out of the container. A spring biasing means, by way of an activator spring (24) is generally employed to effect rotation of the automatic twistlock (20) between the locked and unlocked positions. The retractable automatic twistlock arrangement (10) of the present invention may further include an emergency release button (26), which, when engaged, causes the fastener element (21) to adopt the unlocked position.

Advantageously, the present invention may be used for supporting and securing containers on railway wagon platforms (rail wagons), but would also equally find use for supporting and securing containers on the trailers of other vehicles. In addition, the present invention provides a twistlock arrangement that allows for simple and reliable automatic locking and unlocking of a container without the need for manual handling of the lock components. This has been adapted to couple with a retraction assembly whereby the retractable automatic twistlock (20) may be concealed below the container loading surface to prevent the twistlock from obstructing the positioning and connection of a 40 ft long container on the load surface.

According to the present invention the retractable automatic twistlock arrangement (10) further includes a retraction assembly (30) adapted to reversibly retract the automatic twistlock (20) from an extended position to a retracted position, wherein the extended position is characterised in that the automatic twistlock extends above the load surface of the rail wagon or trailer so that the twistlock head (23) may engage with the corner casting of a container (not shown), and the retracted position is characterised in that the automatic twistlock (20) is position below the load surface of the rail wagon or trailer (not shown). In particular, in the embodiment depicted in Figures 1 to 3, the automatic twistlock is received within a housing unit (31) that is positioned below the load surface of the rail wagon or trailer when in the retracted position.

As shown in Figures 1 to 3, the retraction assembly (30) includes a retractable shuttle (32), which is adapted to be slidingly received within the housing unit (31). In addition, the retractable shuttle (32) includes a central channel (33) for receiving the rotatable fastener shaft (22) therethrough. As shown in Figure 1, the rotatable fastener shaft (22) is positioned through the central channel (33) so that the twistlock head (23) resides just above the retractable shuttle (32). However, any other arrangement that suitably couples the fastener element (21) to the retractable shuttle (32) such that the fastener element (21) may rotate and retract may also be used.

The retraction assembly (30) further includes a base plate (40) forming a base of the housing unit (31). In the embodiments depicted in Figures 1, 3 and 5, the base plate (40) is a separate plate that may be removably affixed to the housing unit (31). However, the base plate (40) may alternatively be integrally formed with the housing unit (31).

Further, the base plate (40) includes a central hollow cylindrical member (41), which extends upwardly from the base plate (40) and thus resides within the housing unit (31). The rotatable fastener shaft (22) may be slidingly received through the central hollow cylindrical member (41), which allows for the rotatable fastener shaft (22) to travel downwards and upwards through the central hollow cylindrical member (41) as required during the reversible retraction of the fastener element (21) from the extended position to the retracted position.

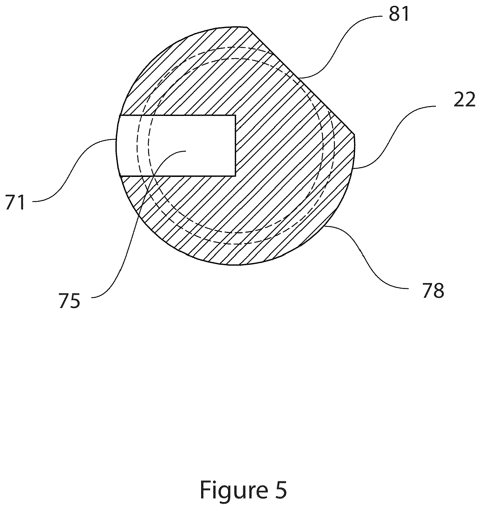

Referring now to Figure 5, a nut (42) may also be optionally attached to a distal end (25) of the rotatable fastener shaft (22) in order to more precisely control the range of movement of the rotatable fastener shaft (22). The nut (42) may be sized to fit within a portion of the central hollow cylindrical member (41) and abut against a flange located within (not shown). Alternatively, the nut may rest against the base plate (40) when the automatic twistlock (20) is in the extended position.

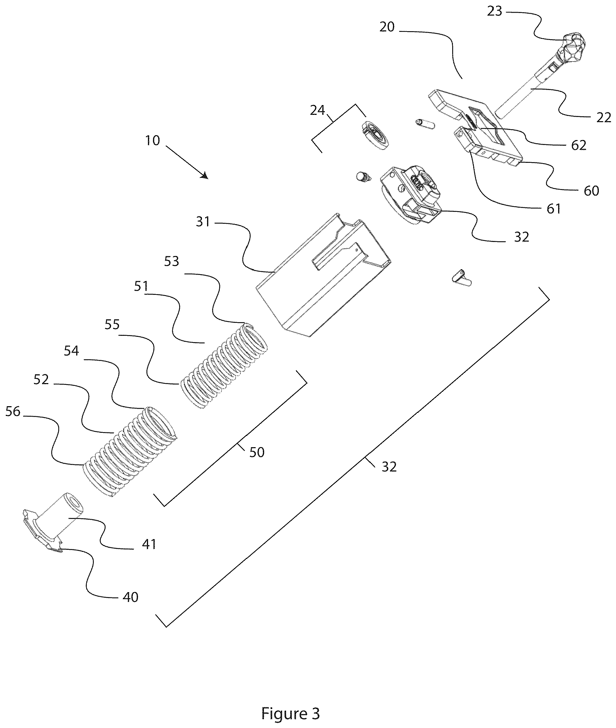

The retraction assembly (30) also includes a spring member, which should be sufficiently biased such that the fastener element (21) remains in the extended position when a corner casting of the container (not shown) engages with the twistlock head (23) and then is urged to the retracted position when a non-corner casting portion of the container (not shown) engages with the twistlock head (23). Referring to the embodiment shown in Figure 3, the spring member (50) is in the form of a concentric spring consisting of two helical compression springs (51, 52). When assembled, the first ends (53, 54) of the helical compression springs (51, 52) cooperatively engage with the retractable shuttle (32) and the second ends (55, 56) of the helical compression springs (51, 52) abut the base plate which provides sufficient stiffness so that when a corner casting of the container (not shown) engages with the twistlock head (23), the springs remain extended and a non-corner casting portion of the container is sufficient to compress the springs (51, 52), which in turn results in the movement of the retractable shuttle (32) and fastener element (21) downwards within the housing unit (31).

As depicted in Figures 1 to 5, the retractable automatic twistlock arrangement (10) may include a flange (60), which is adapted to reside on the load surface of the rail wagon or trailer. As shown, the flange (60) includes an opening (62) through which the rotatable fastener shaft (22) may be received and the twistlock head (23) is positioned above the flange (60) so that the automatic twistlock (20) may interact with a corner casting and slot of a container.

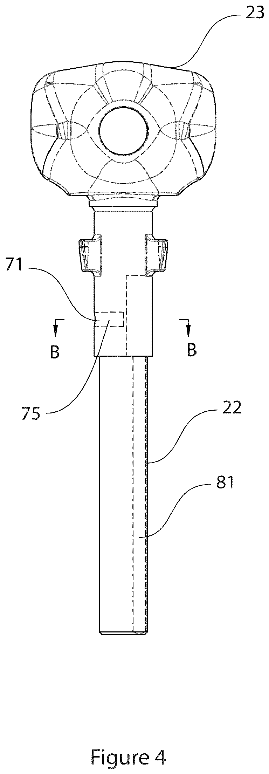

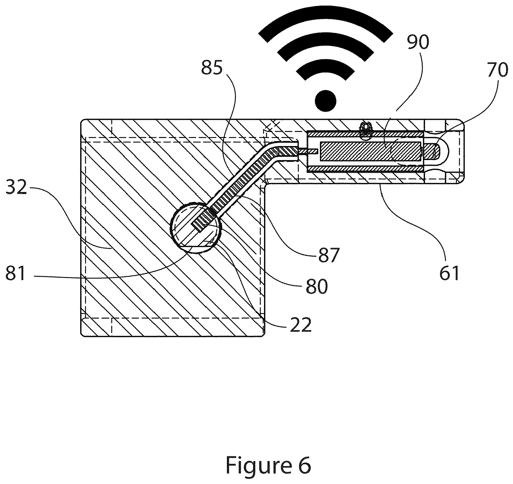

Referring to Figures 1 to 3, the retractable automatic twistlock arrangement (10) may further include an indicator system, which includes a transmitter or communications module (90)in communication with the fastener element (21) and an indicator, wherein the indicator provides a signal indicating whether the fastener element (21) of the automatic twistlock (20) is in the locked position or the unlocked position. In particular, as shown in Figures 1 to 3, the indicator is a visual indicator in the form of an indicator light (70). However, any other suitable type of indicator may also be used. Figure 4 shows a close-up of the shaft (22) with the twistlock head (23). Located on the shaft (22) is an opening (71) to receive a magnet (80) within (as shown in Figure 6), which can be held fast by a friction fit or by the use of a suitable retaining material. The opening 71 leads to a chamber 75 that extends approximately half the diameter of the shaft 22. Figure 5 is a cross sectional view through B - B showing the opening 71 and chamber 75, the outer diameter 78 of the shaft 22 having a flat section 81.

Figure 6 is a cross sectional view of the shuttle 32 showing the shaft 22 with the magnet 80 located in the chamber 75 of the shaft, a conduit 85 into which is placed or inserted a magnetic or ferromagnetic rod 87, in this embodiment it is elbow shaped to mirror the shape of the conduit 85 (magnetic conduit), a communications module 90 (battery powered) located within the extension piece 61. In this embodiment the conduit 85 with rod 87 forms the static/stationary/fixed second part of the magnetic switch and is operatively connected to the communications module 90 such that when the shaft 22 is rotated in order to underline the magnet 80 with the rod 87 in the conduit 85 the communications module registers that this is a locked position of the twist lock head 23, the magnet 80 and the rod 87 being aligned/coaxially aligned. The communications module can then transmit this information to communication/transmission circuitry to activate an indicator light 70 and/or a wireless transmitter that is configured to transmit the signal via one or more electromagnetic transmissions (i.e. a radio transmission, microwave transmission, infrared transmission, magnetic transmission wireless transmissions may be either one or more networks such as Internet), light transmission using TCP communications protocol for example or any combination thereof.), a Wi-Fi network, a cellular network, a radio telecommunications network, a Bluetooth network, a MFC network, or other suitable wireless networks.

The wireless transmission signal can then be read by an operator remote to the container, for example a crane operator, who is then able to readily ascertain the status of any particular twist lock in operation. When the shaft 22 is rotated to substantially align the magnet 18 in the shaft 22 with the rod 87 in the conduit 85 then this can be read also by the communications module 92 indicate that the twistlock-head 23 is in the unlocked position and once again this status can be transmitted to the light 70 as well as to the communication circuitry within the communication module 90 and transmit wirelessly that information to an external location.

In some embodiments the indicator light 70 will provide a 1st signal colour to indicate a locked status, for example red, and a 2nd colour to indicate and unlocked status for example green. In other embodiments the light 70 may be programmed to flash or not flash as required in order to indicate a particular status.

The use of the wireless transmitter in the communication module 90 provides the ability for the status of a series/set of twist locks to be transmitted to a remote crane operator. For example, a crane operator retrieving a container from a rail wagon lowers the spread of the crane to align with the corner castings of the container and activates the spreaders twist locks to lock on to the containers upper corner castings. The twist locks on the rail wagon then rotate to an unlocked position, which is recognised by the communications module 90 due to the dis-alignment between the magnet 80 in the shaft 22 (first part) and the rod 87 in the conduit 85 (second part). The wireless transmitter in the communication module 90 can then relay that information direct to the crane operators console indicating that each of the twist locks are open and disengaged from the lower corner castings of the container to be removed.

The crane operator can then proceed to remove the container from the railway wagon knowing that's status of each of the twist locks is open. If, for example, one of the rail wagon twist locks were to now function and remain in the locked position then the status of that malfunctioning twist lock would be conveyed to the crane operator by way of the wireless transmitter in the malfunctioning twist lock and the crane operator would be able to quickly determine that from the appropriate operations panel within the cranes And thus aborting any attempt to remove the container from the rail wagon until the operation of the malfunctioning twist lock had been corrected.

In addition, the present invention also provides an easy way for the transmission of twist lock operational status to other workers connected with the removal/placement of containers, for example a truck operator who may remain within their vehicle during removal/replacement of containers onto a truck trailer flatbed fitted with twist locks of the present invention.

The wireless transmitter in the communications module 90 may transmit signals described for any other communication link, such as any other WPAN communication link (e.g., Bluetooth low power, Bluetooth 5, ANT+, Zigbee (IEEE 802.15.4), other IEEE 802.15 protocols, IEEE 802.11 A, B or G without limitation, or Wi-Fi (IEEE 802.11)), a cellular communication link, an infrared communication link, any other wireless communication link, any other communication link, or any combination of the preceding.

In the present embodiment, the indicator system is located within the flange (60) and more particularly, within an extension piece (61) so that the indicator is visible when the container is connected to the load surface.

In other embodiments, the invention may include one or several different methods of communicating the status of the twist lock, for example some embodiments may only include a light (70) located in the extension piece (61). In other embodiments the invention may utilise an indicator light (70) and/or a communications module (70) Advantageously, the indicator system as described provides a suitable means whereby an automatic lifting device can easily locate and detect the locking/unlocking position of the automatic twistlock (20) when loading and unloading containers. The location of the indicator system within the extension piece (61) of the flange (60) is very important to allow for communication with an automatic lifting device and confirm the correct position of the twistlocks to allow the lifting device to proceed with picking up or loading the container.

Overall, the unique retractable automatic twistlock arrangement (10) described above makes available an alternative to existing twistlock arrangements, which provides a fully automated arrangement that is simple and convenient to operate and combines the benefits of automatic twistlocks with the ability to reversibly retract the retractable automatic twistlock arrangement (10) below the load surface of a rail wagon or trailer when required. In addition, the indicator system combined with the other features mentioned, enables fully automatic loading, unloading and securing of containers to load surfaces.

As can now be appreciated, the invention as presently described provides a great improvement over that which is currently known and greatly facilitates the development of automation in container terminals, and specifically rail terminals. The system will allow for automatic picking and replacing of containers to rail platforms and road chassis. The innovation will streamline operations and contribute to increased productivity and safety.

## Claims

1. A retractable automatic twistlock arrangement (10) for connecting a container to a load surface of a rail wagon or a trailer, wherein the retractable automatic twistlock arrangement includes:
a twistlock having a fastener element (21), the fastener element including a rotatable fastener shaft (22) with a twistlock head (23),
wherein the fastener element is adapted to be operable between a locked position and an unlocked position, and
wherein the rotatable fastener shaft includes a position indictor arrangement (70) operatively coupled to a communication module (90) which can transmit the position of the rotatable fastener shaft,
wherein the position indictor arrangement includes a switch means,
**characterised in that** the switch means is a magnetic switch having a first part attached to the rotatable fastener shaft and a stationary second part operatively connected to the communication module,
wherein there is a magnetic conduit (85) placed between the first part attached to the rotatable fastener shaft and the stationary second part operatively connected to the communication module.

2. The twistlock arrangement of claim 1, wherein the magnetic conduit (85) is operatively connected to the communication module (90).

3. The twistlock arrangement of claim 1, wherein the first part is a magnet.

4. The twistlock arrangement of claims 2 and 3, wherein when the magnet in the first location and the magnetic conduit in a second location are aligned, in particular coaxially aligned, the communication module transmits a signal indicating that the twistlock is in a locked position.

5. The twistlock arrangement of claims 2 and 3, wherein when the magnet in the first location and the magnetic conduit in a second location are not aligned, in particular not coaxially aligned, the communication module transmits a signal indicating that the twistlock is in an open position.

6. The twistlock arrangement of any one of the above claims 1-5, wherein the rotatable fastener shaft includes an opening for receiving the first part of the switch means.

7. The twistlock arrangement of any one of the above claims 1-6, wherein the stationary second part is a housing that at least partially surrounds the rotatable fastener shaft.

8. The twistlock arrangement of claim 7, wherein the housing includes a conduit.

9. The twistlock arrangement of claim 8, wherein the conduit includes a magnetic coupler being a ferromagnetic rod.

10. The twistlock arrangement of any one of the above claims 1-9, wherein the communication module includes a wireless transmitter that may transmit the position of the rotatable fastener shaft described for any communication link, such as any other WPAN communication link (e.g., Bluetooth low power, Bluetooth 5, ANT+, Zigbee (IEEE 802.15.4), other IEEE 802.15 protocols, IEEE 802.11 A, B or G without limitation, or Wi-Fi (IEEE 802.11)), a cellular communication link, an infrared communication link, any other wireless communication link, any other communication link, or any combination of the preceding.

## Patentansprüche

1. Einziehbare automatische Twistlock-Anordnung (10) zum Verbinden eines Containers mit einer Ladeoberfläche eines Eisenbahnwagens oder eines Anhängers, wobei die einziehbare automatische Twistlock-Anordnung aufweist:
ein Twistlock mit einem Befestigungselement (21), wobei das Befestigungselement eine drehbare Befestigungswelle (22) mit einem Twistlock-Kopf (23) aufweist,
wobei das Befestigungselement dazu ausgebildet ist, zwischen einer verriegelten Position und einer entriegelten Position betreibbar zu sein, und
wobei die drehbare Befestigungswelle eine Positionsangabeanordnung (70) aufweist, die betriebsmäßig mit einem Kommunikationsmodul (90) gekoppelt ist, das die Position der drehbaren Befestigungswelle übertragen kann,
wobei die Positionsangabeanordnung ein Schaltmittel aufweist,
**dadurch gekennzeichnet, dass**
das Schaltmittel ein magnetischer Schalter ist, der ein erstes Teil, das an der drehbaren Befestigungswelle angebracht ist, und ein stationäres zweites Teil, das betriebsmäßig mit dem Kommunikationsmodul verbunden ist, aufweist,
wobei eine magnetische Leitung (85) vorgesehen ist, die zwischen dem ersten Teil, das an der drehbaren Befestigungswelle angebracht ist, und dem stationären zweiten Teil, das betriebsmäßig mit dem Kommunikationsmodul verbunden ist, angeordnet ist.

2. Twistlock-Anordnung nach Anspruch 1, wobei die magnetische Leitung (85) mit dem Kommunikationsmodul (90) betriebsmäßig verbunden ist.

3. Twistlock-Anordnung nach Anspruch 1, wobei das erste Teil ein Magnet ist.

4. Twistlock-Anordnung nach den Ansprüchen 2 und 3, wobei das Kommunikationsmodul ein Signal, das angibt, dass sich das Twistlock in einer verriegelten Position befindet, überträgt, wenn der Magnet an dem ersten Ort und die magnetische Leitung an einem zweiten Ort zueinander ausgerichtet sind, insbesondere koaxial zueinander ausgerichtet sind.

5. Twistlock-Anordnung nach den Ansprüchen 2 und 3, wobei das Kommunikationsmodul ein Signal, das angibt, dass sich das Twistlock in einer offenen Position befindet, überträgt, wenn der Magnet an dem ersten Ort und die magnetische Leitung an einem zweiten Ort nicht zueinander ausgerichtet sind, insbesondere nicht koaxial zueinander ausgerichtet sind.

6. Twistlock-Anordnung nach einem der vorhergehenden Ansprüche 1-5, wobei die drehbare Befestigungswelle eine Öffnung zum Aufnehmen des ersten Teils des Schaltmittels aufweist.

7. Twistlock-Anordnung nach einem der vorhergehenden Ansprüche 1-6, wobei das stationäre zweite Teil ein Gehäuse ist, das die drehbare Befestigungswelle zumindest teilweise umgibt.

8. Twistlock-Anordnung nach Anspruch 7, wobei das Gehäuse eine Leitung aufweist.

9. Twistlock-Anordnung nach Anspruch 8, wobei die Leitung einen magnetischen Koppler aufweist, der eine ferromagnetische Stange ist.

10. Twistlock-Anordnung nach einem der vorhergehenden Ansprüche 1-9, wobei das Kommunikationsmodul einen drahtlosen Sender aufweist, der die Position der drehbaren Befestigungswelle, die für eine beliebige Kommunikationsverbindung beschrieben ist, übertragen kann, wie eine beliebige andere WPAN-Kommunikationsverbindung (z.B. Bluetooth Low Power, Bluetooth 5, ANT+, ZigBee (IEEE 802.15.4), andere IEEE 802.15-Protokolle, IEEE 802.11 A, B oder G ohne Einschränkung oder Wi-Fi (IEEE 802.11)), eine Mobilfunk-Kommunikationsverbindung, eine Infrarot-Kommunikationsverbindung, eine beliebige andere drahtlose Kommunikationsverbindung, eine beliebige andere Kommunikationsverbindung oder eine beliebige Kombination der vorgenannten.

## Revendications

1. Un agencement de verrou tournant automatique rétractable (10) pour relier un conteneur à une surface de chargement d'un wagon ou d'une remorque, l'agencement de verrou tournant automatique rétractable comprenant :
un verrou tournant comportant un élément (21) formant organe de fixation, l'élément formant organe de fixation comprenant un arbre rotatif (22) d'organe de fixation doté d'une tête de verrou tournant (23),
l'élément formant organe de fixation étant adapté pour être actionnable entre une position verrouillée et une position déverrouillée, et
l'arbre rotatif d'organe de fixation comprenant un agencement indicateur de position (70) fonctionnellement relié à un module de communication (90) qui est apte à transmettre la position de l'arbre rotatif d'organe de fixation,
l'agencement indicateur de position comprenant un moyen de commutation,
**caractérisé en ce que**
le moyen de commutation est un commutateur magnétique ayant une première partie fixée à l'arbre rotatif d'organe de fixation et une deuxième partie fixe fonctionnellement connectée au module de communication,
un conduit magnétique (85) étant placé entre la première partie fixée à l'arbre rotatif d'organe de fixation et la deuxième partie stationnaire connectée fonctionnellement au module de communication.

2. L'agencement de verrou tournant selon la revendication 1, dans lequel le conduit magnétique (85) est connecté de manière fonctionnelle au module de communication (90).

3. L'agencement de verrou tournant selon la revendication 1, dans lequel la première partie est un aimant.

4. L'agencement de verrou tournant selon les revendications 2 et 3, dans lequel lorsque l'aimant dans le premier emplacement et le conduit magnétique dans un deuxième emplacement sont alignés, en particulier alignés coaxialement, le module de communication transmet un signal indiquant que le verrou tournant est dans une position verrouillée.

5. L'agencement de verrou tournant selon les revendications 2 et 3, dans lequel lorsque l'aimant dans le premier emplacement et le conduit magnétique dans un deuxième emplacement ne sont pas alignés, en particulier pas alignés coaxialement, le module de communication transmet un signal indiquant que le verrou tournant est dans une position d'ouverture.

6. L'agencement de verrou tournant selon l'une quelconque des revendications 1 à 5 ci-dessus, dans lequel l'arbre rotatif d'organe de fixation comprend une ouverture pour recevoir la première partie du moyen de commutation.

7. L'agencement de verrou tournant selon l'une quelconque des revendications 1 à 6 ci-dessus, dans lequel la deuxième partie fixe est un boîtier qui entoure au moins partiellement l'arbre rotatif d'organe de fixation.

8. L'agencement de verrou tournant selon la revendication 7, dans lequel le boîtier comprend un conduit.

9. L'agencement de verrou tournant selon la revendication 8, dans lequel le conduit comprend un coupleur magnétique qui est une tige ferromagnétique.

10. L'agencement de verrou tournant selon l'une quelconque des revendications 1 à 9 ci-dessus, dans lequel le module de communication comprend un émetteur sans fil qui est apte à transmettre la position de l'arbre rotatif d'organe de fixation décrit pour toute liaison de communication, telle que toute autre liaison de communication WPAN (par exemple, Bluetooth low power, Bluetooth 5, ANT+, Zigbee (IEEE 802.15.4), autres protocoles IEEE 802.15, IEEE 802.11 A, B ou G sans limitation, ou Wi-Fi (IEEE 802.11)), une liaison de communication cellulaire, une liaison de communication infrarouge, tout autre lien de communication sans fil, tout autre lien de communication ou toute combinaison de ce qui précède.
